# EUROPÄISCHE PATENTSCHRIFT

(11) **EP 3 457 125 B1**
(45) Veröffentlichungstag und Bekanntmachung des Hinweises auf die Patenterteilung: **05.11.2025**
(21) Anmeldenummer: 17191164.7
(22) Anmeldetag: 14.09.2017
(51) Int. Cl.: G01N 27/62, G01N 21/67, G01N 27/68

(54) **VORRICHTUNG UND VERFAHREN ZUR DETEKTION GASFÖRMIGER SCHADSTOFFE**
DEVICE AND METHOD FOR DETECTING HAZARDOUS GASES
DISPOSITIF ET PROCÉDÉ DESTINÉS À LA DÉTECTION DE SUBSTANCES TOXIQUES GAZEUSES

(43) Veröffentlichungstag der Anmeldung: 20.03.2019
(73) Patentinhaber: Airsense Analytics GmbH, 19061 Schwerin (DE)
(72) Erfinder: WALTE, Andreas, 19059 Schwerin (DE); MUENCHMEYER, Wolf, 38468 Ehra-Lessien (DE); UNGETHUEM, Bert, 19059 Schwerin (DE)
(74) Vertreter: Gulde & Partner

(56) Entgegenhaltungen:
- DE-A1- 3 937 547
- US-A1- 2002 003 210
- US-A1- 2016 041 101
- AUMAILLE K ET AL: "Study of oxygen/tetraethoxysilane plasmas in a helicon reactor using optical emission spectroscopy and mass spectrometry; Oxygen/tetraethoxysilane plasmas in a helicon reactor", PLASMA SOURCES SCIENCE AND TECHNOLOGY, INSTITUTE OF PHYSICS PUBLISHING, BRISTOL, GB, vol. 9, no. 3, 1 August 2000 (2000-08-01), pages 331 - 339, XP020069818, ISSN: 0963-0252, DOI: 10.1088/0963-0252/9/3/311
- ANONYMOUS: "Ion-mobility spectrometry - Wikipedia", 29 December 2016 (2016-12-29), XP055425944, Retrieved from the Internet <URL:https://web.archive.org/web/20161229104049/https://en.wikipedia.org/wiki/Ion-mobility_spectrometry> [retrieved on 20171116]
- "Applied Spectroscopy Reviews", 10 December 2013, TAYLOR & FRANCIS GROUP, Philadelphia, ISBN: 978-1-138-19948-4, article G A EICEMAN ET AL: "Ion Mobility Spectrometry, Third Edition", pages: 91 - 117, XP055426871

## Beschreibung

Die Erfindung betrifft eine Vorrichtung und ein Verfahren zur Detektion gasförmiger Schadstoffe.

Es ist bekannt, dass viele toxische Verbindungen phosphororganische Verbindungen sind. Beispiele sind Nervenkampfstoffe sowie viele Pestizide, Begasungsmittel wie Phosphin, aber auch Zusatzstoffe in Flugzeugölen, wie das Tricresylphosphat (TCP).

Andere toxische Verbindungen sind schwefelorganische Verbindungen. Beispiele sind Hautkampfstoffe wie die Yperite oder toxische Industriegase wie Schwefelwasserstoff, Schwefelkohlenstoff, Schwefeldioxid oder Begasungsmittel wie Sulfuryldifluorid.

Häufig werden tragbare Geräte zur Detektion toxischer Gase benötigt. Viele Messgeräte zur Detektion gasförmiger Stoffe, die auf unterschiedlichen Messverfahren basieren, sind bekannt.

So beschreiben beispielsweise US 4974963 und FR 2743885 ein Messgerät auf Basis eines Flammenspektrometers zur Analyse eines Gasgemisches auf phosphor- und/oder schwefelhaltige Verbindungen. Die Umgebungsluft wird angesaugt und die Verunreinigungen oder Kontaminationen in der Luft mit Wasserstoff verbrannt. Optische Emissionslinien weisen auf die Anwesenheit von phosphorhaltigen, bzw. schwefelhaltigen Verbindungen hin.

US 7,906,071 B2 beschreibt den sensitiven und selektiven Nachweis der Emissionslinien in einer Wasserstoffflamme. So werden z.B. Phosphor-Verbindungen bei einer Wellenlänge von 525nm, der Emission von dem HPO-Molekül, und Schwefel-Verbindungen bei 394nm, der Emission vom S₂-Molekül, nachgewiesen. Die Emissionslinien werden mit optischen Filtern und einem Photodetektor, wie z.B. Photodioden oder Photomultiplier, nachgewiesen. Nachweisgrenzen für viele der Phosphor- und Schwefel-Verbindungen liegen im unteren ppb-Bereich.

Es existieren auch andere Stoffgruppen die charakteristische Emissionslinien liefern, so z.B. Kohlenwasserstoffe oder Cyanide, aber auch Explosivstoffe (z.B. Nitroaromaten, oder Peroxide).

Eine etwas abgewandelte Form der optischen Detektion ist die gepulste Flammenspektroskopie, bei der die Wasserstoffflamme nur kurzfristig brennt und somit z.B. auch das Nachleuchten der Verbindungen (Fluoreszenz) in der Flamme ausgewertet werden kann. US 5,153,673 beschreibt die Vorteile und Möglichkeiten zum Einsatz gepulster Flammen zur Detektion von chemischen Verbindungen.

Nachteilig bei den Verfahren ist, dass eine Identifizierung der chemischen Verbindungen nicht möglich ist, da der optische Detektor nur elementspezifische, bzw. bruchstückspezifische Informationen liefert, wie z.B. eine "Schwefel-Emissionslinie" oder eine "Phosphor-Emissionslinie". Eine Unterscheidung ob die Schwefel-Emissionslinie von H2S, CS2 oder dem Hautkampfstoff S-Lost stammt, ist z.B. nicht möglich.

Nachteilig ist zusätzlich, dass Wasserstoff benötigt wird, um die Flamme aufrecht zu erhalten. Wasserstoff kann beispielsweise in Form von einer Gasflasche, oder gespeichert in einem Metallhydrid, zur Verfügung gestellt werden. Da Wasserstoff sehr brennbar und somit explosiv sein kann, unterliegt der Transport Sicherheitsbestimmungen. Nachteilig ist auch, dass durch die Wasserstoffquelle das Gewicht des Messgerätes zunimmt und für tragbare Anwendungen nicht ideal ist. Lösungen über die Speicherung des Wasserstoffes in Metallhydride benötigen zusätzliche thermische Energie um den Wasserstoff freizusetzen und sind daher im Verbrauch sehr ungünstig. Andere Lösungen, wie z.B. die Erzeugung von Wasserstoff durch Elektrolyse, sind auch möglich, aber mit zusätzlichem Energieaufwand und Platzbedarf verbunden.

US 6,734,964 beschreibt ein Verfahren, bei dem Moleküle mittels einer niederenergetischen gepulsten Plasmaquelle angeregt werden und die Emissionslinien zum Nachweis von gasförmigen Substanzen herangezogen werden. Vorteilhaft ist hier, dass keine brennbaren Gase, wie z.B. Wasserstoff, verwendet werden. Neben dem Einsatz von Helium, Argon und Stickstoff zur Erzeugung des Plasmas ist auch der Einsatz von Luft erwähnt worden. Auch hier ist keine eindeutige Identifizierung der Moleküle möglich, da statt einer Wasserstoffflamme ein Plasma verwendet wird und letztendlich gleiche Bruchstücke der Verunreinigungen, bzw. Kontaminationen entstehen.

Messgeräte, welche auf andere Messprinzipien beruhen, wie lonenanalysatoren, z.B. lonenmobilitätsspektrometer (IMS) oder Massenspektrometer (MS), bzw. Kombinationen aus beiden (IMS-MS) sind auch bekannt. Ionenanalysatoren trennen Ionen nach Laufzeiten in einem Driftgas oder nach einem Masse/Ladungsverhältnis und Liefern Ionenspektren. Diese lonenspektren können bei der IMS Laufzeitspektren sein, oder bei der MS Massenspektren.

Der Aufbau und die Funktionsweise eines lonenanalysators, beispielsweise eines IMS sind in einer Vielzahl von Veröffentlichungen beschrieben worden.

So wird beispielsweise in US 3,621,240 ein klassisches Flugzeit-IMS vorgestellt, bei dem die unterschiedliche Beweglichkeit von Ionen bei Atmosphärendruck ausgenutzt wird. Dazu werden kontinuierlich in einer Ionenquelle die Zielverbindungen ionisiert. Sehr häufig werden hierzu radioaktive Quellen verwendet, die direkt Luftmoleküle ionisieren. Diese ionisierten Luftmoleküle reagieren weiter und bilden zusammen mit Wassermolekülen sogenannte Reaktant-Ionen. Diese Reaktant-Ionen reagieren mittels Protonentransfer-, Elektronentransfer- oder Protonenabstraktions-Reaktionen mit den interessierenden Verbindungen, also den Verunreinigungen, bzw. Kontaminationen in der Luft, und bilden die sog. Produkt-Ionen. Diese Produkt-Ionen werden in einer sehr kurzen Zeitspanne von ca. 200 Mikrosekunden mit Hilfe eines elektrischen Gitters in eine Driftröhre eingelassen, welche ein elektrisches Feld aufweist und die Ionen in einem Driftgas, üblicherweise gefilterte Luft bei Umgebungsdruck, beschleunigt. Als Startpuls für die Messung der Driftgeschwindigkeit im klassischen Flugzeit-IMS dient somit der Schaltprozess des elektrischen Gitters, welcher nur einen Teil der Ionen in den Driftraum lässt.

Durch die Änderung der Polarität des elektrischen Feldes der Driftstrecke können in einem positiven Betriebsmodus positive Ionen und in einem negativen Betriebsmodus negative Ionen nachgewiesen werden. Durch das elektrische Feld werden die eingelassenen Produkt-Ionen ständig beschleunigt und durch Stöße mit den neutralen Molekülen im Driftgas ständig abgebremst. Das elektrische Feld übt auf alle Ionen mit gleicher Ladung die gleiche Zugkraft aus. Da aber die Produkt-Ionen verschiedene Durchmesser und Formen aufweisen, weisen die Produkt-Ionen unterschiedliche Driftgeschwindigkeiten auf. Am Ende der Driftröhre treffen die Produkt-Ionen mit diesen unterschiedlichen Driftgeschwindigkeiten auf einen Detektor auf. Durch die Stöße mit den Molekülen der Umgebungsluft kommt es zu einer diffusiven Verbreiterung der eingelassenen Ionen. Das am Detektor gemessene Signal ist dementsprechend in Form einer gaußförmigen Glockenkurve. Aus der gemessenen Flugzeit oder Driftzeit im Maximum der Glockenkurve und der bekannten Länge der Driftstrecke kann die Driftgeschwindigkeit bestimmt werden. Aus den unterschiedlichen Driftgeschwindigkeiten der Produkt-Ionen durch die Driftröhre, die typischerweise im Bereich von 5 bis 30 Millisekunden liegen, lassen sich Rückschlüsse auf die untersuchten chemischen Verbindungen ziehen. Nachweisgrenzen für viele der Phosphor- und Schwefel-Verbindungen liegen bei IMS-Systemen im unteren ppb-Bereich.

Neben den weiter oben beschriebenen Flugzeit-IMS Systemen gibt es auch noch andere Verfahren um Ionen in Luft zu trennen. Eine Bauform ist das Aspirating-IMS bei dem Ionen in einem Gasstrom transportiert werden und senkrecht dazu durch ein elektrisches Feld abgelenkt werden. Eine andere Art die Ionen zu trennen, nennt sich FAIMS (field asymmetric IMS) oder DMS (differential mobility IMS) Systeme. Bei diesen Systemen werden die Ionen auch in einem Gasfluss transportiert. Senkrecht dazu wird ein asymmetrisches E-Feld aufgebaut. Kurzfristig wird eine sehr hohe Feldstärke angelegt, welche von einem Feld umgekehrter Polarität und wesentlich geringerer Feldstärke und dafür längerer Dauer abgelöst wird. Es erfolgt eine Trennung senkrecht zur Gasflussrichtung durch Nicht-linearitäten in der Abhängigkeit der Driftgeschwindigkeit von der Feldstärke.

Zusätzlich sind IMS Systeme die bei Unterdruck, auch HIKE-IMS genannt, bzw. bei Vakuum betrieben werden. Letztere werden Time-of Flight-Massenspektrometer (TOF-MS) genannt. Diese Systeme wie auch Massenspektrometer unterschiedlichster Bauart sowie Kombinationen aus IMS und MS sind auch lonenanalysatoren und können selbstverständlich auch statt eines IMS zur Analyse der Ionen verwendet werden.

Von Nachteil bei der Verwendung des IMS, bzw. MS und Kombinationen beider, ist aber, dass die Auflösung sehr häufig beschränkt ist und Fehlalarme möglich sind, weil verschiedene Chemikalien ähnliche Spektren erzeugen. So können z.B. manche organischen Verbindungen nicht von phosphororganischen, bzw. schwefelorganischen Verbindungen unterschieden werden. Nachteilig ist zusätzlich, dass die Ionenquellen, insbesondere bei IMS-Systemen, sehr häufig radioaktive Quellen sind. Die Herstellung, der Verkauf und Transport der Messgeräte unterliegen dann vielen behördlichen Regularien.

Weiterhin ist bekannt, dass durch geeignete Kombinationen von Messgeräten die Identifikation verbessert werden kann wie anhand der folgenden Beispiele gezeigt werden soll. So wird z.B. in US 2016/0041101 A1 zur verbesserten Detektion von schwerflüchtigen Verbindungen, wie z.B. Explosivstoffen, eine Kombination aus optischer Detektion mittels oberflächenverstärkter Raman Spektroskopie (SERS) und der lonenmobilitätsspektrometrie vorgeschlagen. Die optische Analyse erfolgt, wie in der Raman Spektroskopie üblich, mittels eines Lasers. Die Ionisierung der Verbindungen im IMS mit einer zusätzlichen Ionenquelle. Nachteilig ist, dass das Verfahren nicht für leichtflüchtige Verbindungen geeignet ist. Ein weiteres Beispiel wird in einer wissenschaftlichen Veröffentlichung (K. Aumaille, A. Granier, M. Schmidt, B. Grolleau, C. Vallée und G. Turban; "Study of oxygen/tetraethoxysilane plasmas in a helicon reactor using optical emission spectroscopy and mass spectrometry"; Plasma Sources Sci. Technol. 9 (2000); pp331-339) beschrieben. Dort werden zur Untersuchung eines Plasmas eine optisches Emissionsspektroskop und ein Massenspektrometer verwendet. Auch hier werden die Messgeräte unabhängig voneinander betrieben. Die optische Analyse erfolgt über das emittierte Licht der Plasmaentladung, beim Massenspektrometer wird eine klassische Ionenquelle, eine Elektronenstoßionenquelle, verwendet. US 2002/0003210 A1 beschreibt ein Verfahren zur Analyse der chemischen Bestandteile von Aerosolen. Die Zusammensetzung der Aerosole wird mittels einer Plasmaquelle, welche bei Unterdruck arbeitet, ermittelt. Aerosole werden aus der Umgebung mittels Unterdruck in ein Vakuum überführt und werden durch das Plasma angeregt, bzw. ionisiert. Der Energieeintrag der Glimmentladung ist groß genug, um eine Atomemissionspektroskopie zu ermöglichen. Die Ionenquelle wird auch dazu verwendet die Aerosole zu ionisieren, um diese anschließend massenspektrometrisch zu analysieren. Nachteilig ist, dass das Messverfahren zur Analyse von Aerosolen konzipiert wurde und mehrere Vakuumpumpen benötigt. Zum Betreiben der Plasmaquelle wird ein Edelgas, vorzugsweise Argon oder Helium, benötigt.

Sowohl die weiter oben erwähnte Flammenspektroskopie, gepulst oder ungepulst, als auch die lonenanalysatoren sind für die Detektion bzw. Identifizierung von vielen flüchtigen und weniger flüchtigen toxische Substanzen in sehr geringen Konzentrationen nicht geeignet.

Der Erfindung liegt die Aufgabe zugrunde, ein Verfahren und eine Vorrichtung der gattungsgemäßen Art zu schaffen, mittels denen in einfacher Weise ohne Verwendung einer radioaktiven Ionenquelle und/oder eines Wasserstoffbehälters gasförmige Schadstoffe detektiert und identifiziert werden können.

Erfindungsgemäß wird diese Aufgabe durch eine Vorrichtung mit den in Anspruch 1 genannten Merkmalen gelöst. Dadurch, dass die Vorrichtung zur Detektion gasförmiger Schadstoffe
- eine optische Analyseeinheit,
- ein lonenanalysator, der aus einem lonenmobilitätsspektrometer besteht
- eine Zuleitung des zu analysierenden Messgases zu der optischen Analyseeinheit und dem lonenanalysator,
- eine Auswerteeinheit zur fotometrischen Messung von mittels der optischen Analyseeinheit gelieferten Emissionslinien,
- eine Auswerteeinheit zur Ermittlung eines Ionenspektrums des zu analysierenden Messgases
- eine Vergleichseinrichtung zum Abgleich der Emissionslinien mit den Ionenspektren und
- eine Anzeigeeinrichtung zum Anzeigen der durch die Vergleichseinheit ermittelten Substanzen des zu analysierenden Messgases,
umfasst, wobei die optische Analyseeinheit eine Ionenquelle umfasst, die eine Energiezufuhrvorrichtung aufweist, und der Ionenquelle ein Ionisierungsraum und Extraktionselektroden zugeordnet sind, über die Ionen dem lonenanalysator zugeführt werden können, ist vorteilhaft möglich, eine Vorrichtung bereitzustellen, mittels der gasförmige Schadstoffe mit hoher Selektivität detektiert werden können.

Die Energiezufuhrvorrichtung umfasst erfindungsgemäß eine Wasserstoffflamme oder eine Gasentladungsvorrichtung. Insbesondere durch die Gasentladungsvorrichtung wird vorteilhaft möglich, ein Korona- oder eine behinderte Entladung (Barrier Discharge) in Luft, Stickstoff, Argon oder Helium zu erzeugen, so dass auf die Verwendung von Brenngasen, beispielsweise Wasserstoff verzichtet werden kann. Die Gasentladung kann hierbei vorzugsweise kontinuierlich oder gepulst betrieben werden.

Durch die Kombination der optischen Analyse mit dem Ionenanalysator, ein Ionenmobilitätsspektrometer, können die jeweils von den beiden Einrichtungen gelieferten Signale, also die Emissionslinien und die Ionenspektren, das Laufzeitspektrum bei IMS, verifiziert werden. Somit wird sehr genau die Bestimmung eventuell vorhandener gasförmiger Schadstoffe in dem Messgas möglich.

Erfindungsgemäß wird die Aufgabe ferner durch ein Verfahren mit den in Anspruch 2 genannten Merkmalen gelöst. Dadurch, dass das Messgas einer optischen Analyse und einer lonenanalyse unterzogen wird, und durch die optische Analyse ermittelten Emissionslinien mit durch die lonenanalyse ermittelten lonenspektren abgeglichen wird und im Ergebnis des Abgleichs in dem Messgas enthaltene gasförmige Schadstoffe bestimmt werden, wobei die Substanzen des Messgases durch eine Energiezufuhr mittels einer Energiezufuhrvorrichtung angeregt werden und die Emissionslinien durch ein optisches Spektroskop nachgewiesen werden, und dass Ladungsträger zur Erzeugung von Ionen verwendet werden, die gleichzeitig der lonenanalyse mit einer lonenmobilitätsspektroskopie zugeführt werden, ist möglich, toxische Substanzen in sehr geringen Konzentrationen in dem Messgas sicher und eindeutig zu bestimmen. Es ist somit nicht nur eine elementespezifische bzw. bruchstückspezifische Information, sondern eine innerhalb der einzelnen Elemente konkrete Bestimmung auf konkrete Substanzen mit hoher Genauigkeit erzielbar. Durch die Kombination der Emissionslinien mit den Ionenspektren, d.h. den Laufzeitspektren, kann sehr exakt die Zusammensetzung des Messgases mit bestimmten toxischen Schadstoffen ermittelt und angezeigt werden.

Ein weiterer Vorteil des Verfahrens ist, dass die Energiezufuhrvorrichtung, z.B. in Form einer Wasserstoffflamme oder einer Gasentladung, auch als Ionenquelle für den lonenanalysator, d.h. das IMS, dient.

Weitere bevorzugte Ausgestaltungen der Erfindung ergeben sich aus den übrigen und in den Unteransprüchen genannten Merkmalen.

Die Erfindung wird nachfolgend in Ausführungsbeispielen anhand der zugehörigen Zeichnungen näher erläutert. Es zeigen:
- Figur 1: eine schematische Darstellung der erfindungsgemäßen Vorrichtung;
- Figur 2: eine erfindungsgemäße Vorrichtung in einem ersten Ausführungsbeispiel und
- Figur 3: eine erfindungsgemäße Vorrichtung in einem zweiten Ausführungsbeispiel.

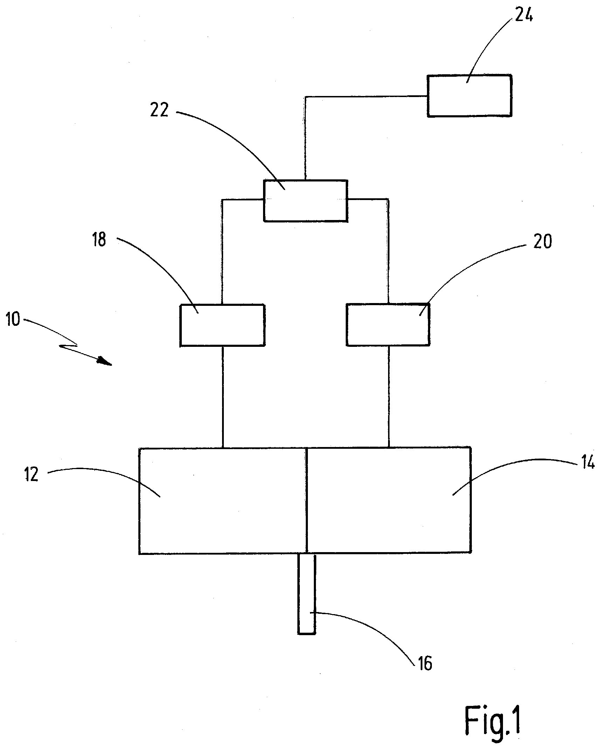

Figur 1 zeigt eine insgesamt mit 10 bezeichnete Vorrichtung zur Detektion gasförmiger Schadstoffe. Die Vorrichtung 10 umfasst eine optische Analyseeinheit 12 sowie ein lonenanalysator 14. Optische Analyseeinheit 12 und lonenanalysator 14 verfügen über eine gemeinsame Zuleitung 16 für ein zu analysierendes Messgas. Als Beispiel eines lonenanalysators 14 wird im Folgendem ein lonenmobilitätsspektrometer (IMS) gezeigt, es kann aber auch eine Kombination aus IMS und MS eingesetzt werden.

Der optischen Analyseeinheit 12 ist eine Auswerteeinheit (18) zur fotometrischen Messung von mittels der optischen Analyseeinheit 12 gelieferten Emissionslinien zugeordnet.

Dem lonenanalysator 14 ist eine Auswerteeinheit 20 zur Ermittlung der Ionenspektren des zu analysierenden Messgases zugeordnet. Die Auswerteeinheiten 18 und 20 sind mit einer Vergleichseinrichtung 22 verbunden, die einen Abgleich der Emissionslinien, die von der Auswerteeinheit 18 geliefert werden, mit dem Ionenspektrum, das von der Auswerteeinheit 20 geliefert wird, durchführt. Die Vergleichseinrichtung 22, welche in der Regel aus einem Rechner besteht und über Datenbanken verfügt, ist mit einer Anzeigeeinrichtung 24 verbunden, die die durch die Vergleichseinrichtung 22 ermittelten Substanzen der Zuleitung 16 zugeführten Messgase anzeigt.

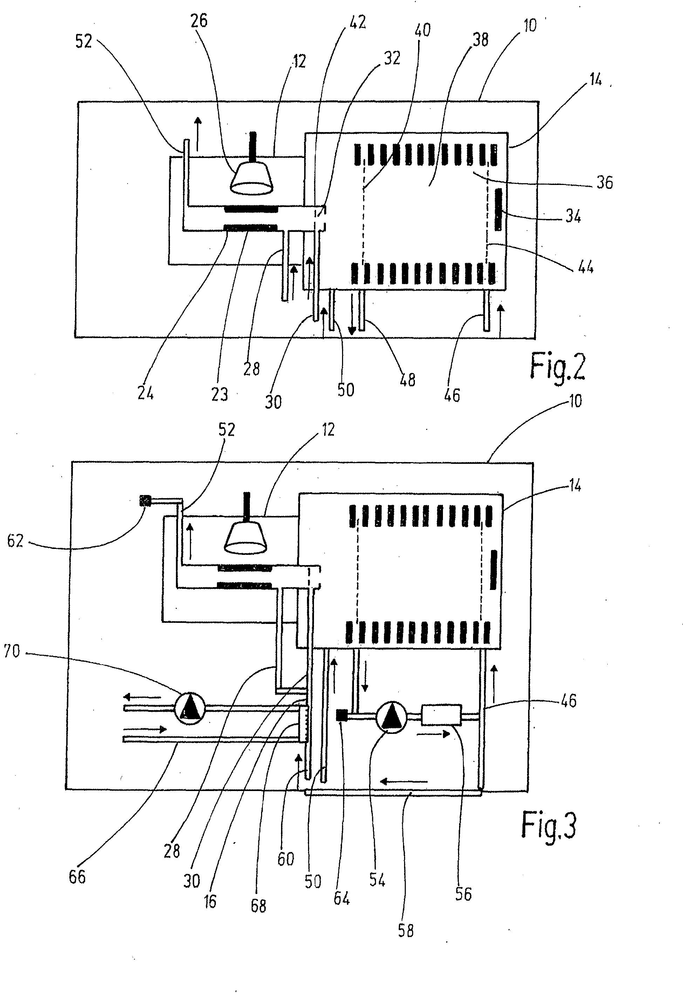

Aufbau und Funktion der Vorrichtung 10 werden anhand der nachfolgenden Figuren 2 und 3 noch näher erläutert.

Anhand der Figur 2 sollen beispielsweise die wesentlichen Komponenten der Vorrichtung 10 und anschließend einige Betriebsmöglichkeiten des Messverfahrens erläutert werden.

Figur 2 zeigt eine Kombination aus Ionenquelle 23 mit Photometer (optische Analyseeinheit 12) und einem lonenanalysator 14 in Form eines IMS. Die Ionenquelle 23 besteht aus einer Energiezufuhrvorrichtung 24, erfindungsgemäß eine Wasserstoffflamme oder eine Gasentladungsvorrichtung. Letztere kann z.B. aus einer Anordnung aus zwei metallischen Nadeln, bzw. einer metallischen Nadel und einer metallischen Fläche bestehen, um mittels einer Hochspannung Koronaentladungen zu erzeugen. Andere Alternativen sind auch möglich, wie z.B. zwei metallische Elektroden, welche mit einem elektrischen Isolator beschichtet sind, um behinderte Entladungen zu realisieren (Barrier Discharge).

Eine weitere Alternative, nicht Teil der Erfindung, sind Elektronenkanonen, welche Elektronen aus einem evakuierten Bereich durch dünne Membranen in Umgebungsdruck schießen können, bzw. an der Membran Röntgenstrahlen erzeugen. Die Elektronen, bzw. die Röntgenstrahlung werden dann bei Umgebungsdruck abgebremst und können dabei Moleküle ionisieren.

Andere Ausführungsformen, die beispielsweise den Triboelektrischen-, den Piezoelektrischen-, oder den Pyroelektrischen-Effekt ausnutzen, sind denkbar.

Des Weiteren befindet sich in der Ionenquelle 23 ein optisches Spektroskop 26 welches in der Lage ist die optischen Emissionslinien, die durch die Energiezufuhr in der Ionenquelle 23 entstehen, aufzuzeichnen. Die zu analysierenden Substanzen werden mit Luft über eine Zuleitung 28 zugeführt.

Die Energiezufuhr, z.B. über die behinderte Entladung, kann kontinuierlich oder diskontinuierlich erfolgen. Bei einer kontinuierlichen Entladung werden die optischen Emissionslinien registriert und nach charakteristischen Emissionslinien analysiert. Eine diskontinuierliche Entladung bietet zusätzlich die Möglichkeit, dass man die Fluoreszenz mit untersucht.

Zusätzlich befinden sich in der Ionenquelle 23 Elektroden 42 zur Extraktion von Ladungsträgern welche in den lonenanalysator 14 gefördert werden. Die Extraktion kann kontinuierlich oder aber auch gepulst betrieben werden. Die gepulste Extraktion kann auch mit einer gepulsten Energiezufuhr in der Ionenquelle 23 gekoppelt werden.

Je nach Betriebsmodus können die Ladungsträger Elektronen oder Ionen, bzw. Ionen-Cluster (Reaktant-Ionen), sein. Diese Ionen, bzw. Ionen-Cluster können dann im lonenanalysator 14 getrennt werden. Elektronen müssen erst mit Substanzen wechselwirken, die z.B. über eine zweite Zuleitung 30 in den lonenanalysator 14 gelangen, um diese Substanzen dann in einem Ionisierungsraum 32 zu ionisieren. Diese Substanzen können dann auch im lonenanalysator 14, z.B. einem IMS, getrennt werden.

Die Energiezufuhrvorrichtung 24 dient somit gleichzeitig auch als Ionenquelle für den lonenanalysator 14, sodass auf die ursprüngliche Ionenquelle, wie z.B. bei IMS üblich eine radioaktive 63Ni-Quelle, verzichtet werden kann.

Die eingeführten, bzw. erzeugten Ionen werden beim IMS über elektrische Felder zu einem Detektor 34 geführt. Die elektrischen Felder werden durch Elektroden 36 in einer Driftröhre 38 erzeugt. Der Einlass in die Driftröhre 38 kann durch ein elektrisches Gitter 40 erfolgen, welches z.B. eine Bradbury-Nielsen Geometrie aufweist. Unter bestimmten Umständen kann auf das Gitter 40 verzichtet werden, wenn die Überführung von Ladungsträger über die Extraktionselektroden 42 an der Ionenquelle 23 in gepulster Form erfolgt. Ein weiteres Gitter 44 wird zur Abschirmung des Detektors 34 benötigt.

Das Driftgas kann über einen Einlass 46 am lonenanalysator 14 in die Driftröhre gelangen. Der Auslass 48 des Driftgases wird häufig in der Nähe des Einlassgitters 40 positioniert. Ein geringer Anteil des Driftgases wird über eine zweite Zuleitung 50 zugeführt und dient auch zur Spülung des Bereiches zwischen Ionenquelle 23 und Einlassgitter 40.

Weitere Ausführungsformen, in denen durch gezielte Zufuhr von zusätzlichen Gasen die Ionenbildung beeinflusst wird, sind auch denkbar. Diese Gase, auch Dopandgase genannt, weisen in der Regel höhere Protonenaffinitäten, bzw. Elektronenaffinitäten als die Reaktant-Ionen in Luft auf und führen somit zu weniger komplexen Spektren, da nur noch Substanzen mit Protonenaffinitäten, bzw. Elektronenaffinitäten höher als die der Dopandgase gemessen werden können.

Weitere Ausführungsformen, bei denen statt des IMS als lonenanalysators 14 ein IMS-MS eingesetzt wird sind auch denkbar.

Die in den Figuren 2 und 3 dargestellte Vorrichtung 10 kann folgende Betriebsmöglichkeiten aufweisen:
Die beiden Zuleitungen 28 und 30 werden zu der Zuleitung 16 zusammengeführt. Die Substanzen im Messgas gelangen durch die Zuleitung 28 zur Energiezufuhrvorrichtung 24 und werden dort angeregt um dann die Emissionslinien mit dem optischen Spektroskop 26 nachzuweisen. Die Luft mit dem Messgas, sowie die erzeugten Ionen und weitere Neutralteilchen werden über einen Abluftanschluss 52 abgeführt. Ladungsträger, wie z.B. Elektronen oder Ionen, werden aus dem Bereich der Energiezufuhrvorrichtung 24 entgegen der Gasströmung mittels der Extraktionselektroden 42 in den Ionisierungsraum 32 des lonenanalysators 14 überführt. Die Extraktionselektroden 42 können umgepolt werden um alternierend positive und negative Ladungsträger in den Ionisierungsraum 32, bzw. den lonenanalysator 14 zu überführen. Eine Trennung der Ladungsträger kann über einen gepulsten Betrieb der Extraktionselektroden 42 erfolgen, bei dem man die unterschiedliche Beweglichkeit der Ladungsträger in Luft verwendet, um diese zu trennen.

Die Ladungsträger im Ionisierungsraum 32 des lonenanalysators 14 werden verwendet um Substanzen, die durch die zweite Zuleitung 30 in den lonenanalysator 14 eingeführt werden, zu ionisieren. Diese Ionen werden durch elektrostatische Felder in Richtung des Einlassgitters 40 geführt. Das Einlassgitter 40 kann dann zu definierten Zeiten mit Öffnungszeiten im Bereich einiger µs die Ionen in die Driftröhre 38, z.B. eines IMS, überführen. Die Ionen werden beim IMS dann innerhalb von einigen ms zum Detektor 34 gelangen.

Eine weitere Möglichkeit zur Überführung der Ladungsträger ist den Aufbau so zu gestalten, dass die Luftgeschwindigkeit durch die Energiezufuhrvorrichtung 24 höher, als die Driftgeschwindigkeit einzelner Ladungsträger in Richtung des lonenanalysators 14 ist. Somit können nur die Ladungsträger mit höherer Beweglichkeit in den lonenanalysator 14 gelangen.

Die Ionenspektren, d.h. die Laufzeitspektren werden dann mit Datenbank-Einträgen verglichen und identifiziert. Eine Bestätigung der Identifikation erfolgt durch einen weiteren Vergleich mit den Ergebnissen der photometrischen Messung (Figur 1).

Verschiedene Betriebsmöglichkeiten sind möglich, so können die Zuleitungen 28 und 30 auch getrennt verwendet werden um z.B. die Substanzen im Messgas nur zu bestimmten Zeiten durch die Zuleitung 30 zur Energiezufuhrvorrichtung 24 zu überführen um dort angeregt zu werden. Nach einem kurzen Zeitraum kann über die weitere Zuleitung 28 saubere Luft in die Energiezufuhrvorrichtung 24 gelangen, um Ladungsträger nur zu diesem Zeitpunkt, wo saubere Luft in der Energiezufuhrvorrichtung 24 vorliegt, zu erzeugen. Diese Ladungsträger können dann zum Ionisierungsraum 32, wie weiter oben beschrieben, überführt werden.

Für den mobilen Einsatz der hier vorgestellten Messtechnik ist es vorteilhaft ein IMS als lonenanalysator 14 zu verwenden. Beim mobilen IMS ist das Driftgas wiederzuverwenden, da in der Regel sehr trockene Luft benötigt wird. Die Luft im Driftgas kann mit Molsiebfiltern getrocknet werden. Um die Trockenfilter zu schonen, sollte der Feuchteeintrag aus der Umgebungsluft minimiert werden. Dieses kann durch ein gepulsten Messgaseinlass, welches über Ventile aufgebaut werden kann, oder durch einen Membraneinlass realisiert werden.

Figur 3 zeigt eine der möglichen Ausführungsformen für ein portables Messsystem auf Basis eines IMS mit Trocknung des Driftgases, welches in einem Kreislauf geführt und wiederverwendet wird. Gleiche Teile wie in Figur 2 sind gleich dargestellt und nicht nochmals erläutert.

Eine Kreislaufpumpe 54 fördert das Driftgas über einen Gasfilter 56. Der Gasfilter 56 trocknet und reinigt das Driftgas welches teilweise über die Einlass 46 für das Driftgas wieder ins IMS überführt wird, der Rest wird auf einen Gaspfad 58 als Spülluft über die zweite Zuleitung 50 für Driftgas in die Driftröhre 38 überführt und auf einem anderen Gaspfad 60 als Trägergas für die Zuleitung für Luft 28 und 30 verwendet. Der Abluftanschluss 52 wird über eine Verbindung 62 mit einer Zuleitung 64 zur Kreislaufpumpe 54 gekoppelt.

Das zu analysierende Messgas gelangt über eine Zuleitung 66 zu einem Membraneinlass 68, welcher aus einem Träger und z.B. einer beheizten und dünnen Silikonmembran besteht. Die zu analysierenden Substanzen gelangen über einen Lösungs-, Diffusionsschritt, auch Permeation genannt, in die Zuleitung 16 die zum optischen Spektroskop 12 führt. Das restliche Messgas wird über eine Messgaspumpe 54 aus dem System gefördert.

Die Betriebsweisen der Vorrichtung 10 gemäß Figur 3 können analog der Betriebsweise der in Figur 2 gezeigten Vorrichtung gewählt sein.

Die erläuterten Betriebsweisen der Vorrichtung 10 sind mit verschiedenen Ausführungsformen der lonenanalysatoren, wie z.B. neben der dargestellten klassischen Flugzeit IMS, auch Aspirating-IMS, FAIMS, bzw. DMS, Niederdruck IMS oder Kombinationen aus IMS mit Massenspektrometern möglich.

Es sind insbesondere Verfahren zur Detektion und Identifizierung von spezifischen Verbindungen möglich, bei dem durch die optische Analyse die substanzspezifische Emissionslinie detektiert wird und bei dessen Anwesenheit die ermittelten lonenspektren in der Datenbank der Vergleichseinrichtung 22 abgeglichen werden und bei Übereinstimmung vor der Substanz gewarnt wird und das Identifikationsergebnis über die Anzeigeeinrichtung 24 dargestellt wird.

Es sind insbesondere Verfahren zur Detektion und Identifizierung von phosphororganischen Verbindungen möglich, bei dem durch die optische Analyse die "Phosphor-Emissionslinie" bei 525nm detektiert wird und bei dessen Anwesenheit die ermittelten lonenspektren mit den lonenspektren in der Datenbank der Vergleichseinrichtung 22 abgeglichen werden und bei Übereinstimmung vor der Substanz gewarnt wird und das Identifikationsergebnis über die Anzeigeeinrichtung 24 dargestellt wird.

Es sind insbesondere Verfahren nach zur Detektion und Identifizierung von schwefelhaltigen Verbindungen möglich, bei dem durch die optische Analyse die "Schwefel-Emissionslinie" bei 394nm detektiert wird und bei dessen Anwesenheit die ermittelten lonenspektren in der Datenbank der Vergleichseinrichtung 22 abgeglichen werden und bei Übereinstimmung vor der Substanz gewarnt wird und das Identifikationsergebnis über die Anzeigeeinrichtung 24 dargestellt wird.

### Bezugszeichenliste

- 10: Vorrichtung
- 12: optische Analyseeinheit
- 14: lonenanalysator
- 16: Zuleitung
- 18: Auswerteeinheit
- 20: Auswerteeinheit
- 22: Vergleichseinrichtung/ -einheit
- 23: Ionenquelle
- 24: Energiezufuhrvorrichtung
- 26: Spektroskop
- 28: Zuleitung
- 30: Zuleitung
- 32: Ionisierungsraum
- 34: Detektor
- 36: Elektroden
- 38: Driftröhre
- 40: Gitter
- 42: Elektroden
- 44: Gitter
- 46: Einlass
- 48: Auslass
- 50: Einlass
- 52: Abluftanschluss
- 54: Kreislaufpumpe
- 56: Gasfilter
- 58: Gaspfad
- 60: Gaspfad
- 62: Verbindung
- 64: Zuleitung
- 66: Zuleitung
- 68: Membraneilass

## Patentansprüche

1. Vorrichtung (10) zur Detektion gasförmiger Schadstoffe umfassend
- eine optische Analyseeinheit (12),
- ein lonenanalysator (14), der aus einem lonenmobilitätsspektrometer besteht,
- eine Zuleitung (16) für das zu analysierende Messgas zu der optischen Analyseeinheit (12) und dem lonenanalysator (14),
- eine Auswerteeinheit (18) zur fotometrischen Messung von mittels der optischen Analyseeinheit (12) gelieferten Emissionslinien,
- eine Auswerteeinheit (20) zur Ermittlung eines Ionenspektrums des zu analysierenden Messgases mit Hilfe des lonenanalysators (14)
- eine Vergleichseinrichtung (22) zum Abgleich der Emissionslinien mit den Ionenspektren und
eine Anzeigeeinrichtung (24) zum Anzeigen der durch die Vergleichseinheit ermittelten Substanzen des zu analysierenden Messgases, **dadurch gekennzeichnet, dass** die optische Analyseeinheit (12) eine Ionenquelle (23) umfasst, die eine Energiezuführeinrichtung (24), die eine Wasserstoffflamme oder eine Gasentladungsvorrichtung umfasst, aufweist, und der Ionenquelle (23) ein Ionisierungsraum (32) und Extraktionselektroden (42) zugeordnet sind, über die Ionen dem lonenanalysator (14) zugeführt werden können.

2. Verfahren zur Detektion gasförmiger Schadstoffe, bei dem ein Messgas einer Vorrichtung zur Bestimmung von in dem Messgas enthaltener chemischer Verbindungen zugeführt wird, das Messgas einer optischen Analyse und einer Analyse der Ionen unterzogen wird, und durch die optische Analyse ermittelte Emissionslinien mit durch die lonenanalyse ermittelten lonenspektren abgeglichen wird und im Ergebnis des Abgleichs in dem Messgas enthaltene gasförmige Schadstoffe bestimmt werden, **dadurch gekennzeichnet, dass**, die Substanzen des Messgases durch eine Energiezufuhr mittels einer Energiezufuhrvorrichtung, in der die Substanzen des Messgases durch eine Wasserstoffflamme oder eine Gasentladung angeregt werden und die Emissionslinien durch ein optisches Spektroskop nachgewiesen werden und dass Ladungsträger zur Erzeugung von Ionen verwendet werden, die gleichzeitig der lonenanalyse mit einer lonenmobilitätsspektrometrie zugeführt werden.

3. Verfahren nach Anspruch 2, **dadurch gekennzeichnet, dass** der Abzug der Ladungsträger aus der Energiezufuhrvorrichtung in den Ionisierungsraum mit Hilfe von Elektroden und einem Gegenstrom aus einem Driftgas erfolgt, der verhindert, dass Neutralteilchen oder Ionen aus der Ionenquelle in den Ionisierungsraum gelangen.

4. Verfahren nach einem der Ansprüche 2 oder 3, **dadurch gekennzeichnet, dass** der Abzug der Ladungsträger aus der Energiezufuhrvorrichtung in den Ionisierungsraum mit Hilfe von Elektroden erfolgt, die gepulst betrieben werden.

5. Verfahren nach einem der Ansprüche 2 bis 4, **dadurch gekennzeichnet, dass** die Ladungsträger aus der Energiezufuhrvorrichtung über zeitlich folgende positive und negative Potentiale an den Elektroden derart entnommen werden, dass keine Neutralteilchen aus der Ionenquelle in den Ionisierungsraum gelangen und in dem Ionisierungsraum durch den Anstoß der Ladungsträger mit den Zielsubstanzen im Messgas Produkt-Ionen erzeugt werden, die mittels einer lonenanalyse untersucht werden.

6. Verfahren nach einem der Ansprüche 2 bis 5, **dadurch gekennzeichnet, dass** ausgewählte Ladungsträger aus der Energiezufuhrvorrichtung durch Extraktionselektroden und einer gepulst betriebenen Energiezufuhrvorrichtung entnommen werden, so dass nur eine Art von Ladungsträgern in den Ionisierungsraum gelangen.

7. Verfahren nach einem der Ansprüche 2 bis 6, **dadurch gekennzeichnet, dass** die lonenanalyse mit der Kombination aus lonenmobilitätsspektrometrie und Massenspektrometrie erfolgt.

8. Verfahren nach einem der Ansprüche 2 bis 7 zur Detektion und Identifizierung von phosphororganischen Verbindungen, bei dem durch die optische Analyse die "Phosphor-Emissionslinie" bei 525nm detektiert wird und bei dessen Anwesenheit die ermittelten lonenspektren mit den lonenspektren in der Datenbank der Vergleichseinrichtung (22) abgeglichen werden und bei Übereinstimmung vor der Substanz gewarnt wird und das Identifikationsergebnis über die Anzeigeeinrichtung (24) dargestellt wird.

9. Verfahren nach einem der Ansprüche 2 bis 7 zur Detektion und Identifizierung von schwefelhaltigen Verbindungen, bei dem durch die optische Analyse die "Schwefel-Emissionslinie" bei 394nm detektiert wird und bei dessen Anwesenheit die ermittelten lonenspektren in der Datenbank der Vergleichseinrichtung (22) abgeglichen werden und bei Übereinstimmung vor der Substanz gewarnt wird und das Identifikationsergebnis über die Anzeigeeinrichtung (24) dargestellt wird.

## Claims

1. A device (10) for detecting hazardous gases, comprising
- an optical analysis unit (12),
- an ion analyzer (14) consisting of an ion mobility spectrometer,
- a feed line (16) for feeding the sampled gas to be analyzed to the optical analysis unit (12) and to the ion analyzer (14),
- an evaluation unit (18) for photometric measurement of emission lines supplied by way of the optical analysis unit (12),
- an evaluation unit (20) for determining an ion spectrum of the sampled gas to be analyzed using the ion analyzer (14),
- a comparator (22) for comparing the emission lines with the ion spectra and
a display means (24) for displaying the substances of the sampled gas to be analyzed determined by the comparison unit, **characterized in that** the optical analysis unit (12) comprises an ion source (23) having an energy supply means (24) which comprises a hydrogen flame or a gas discharge device, and the ion source (23) is associated with an ionization chamber (32) and extraction electrodes (42), via which ions can be supplied to the ion analyzer (14).

2. A method for detecting hazardous gases, in which a sampled gas is supplied to a device for determining chemical compounds contained in the sampled gas, the sampled gas is subjected to an optical analysis and an analysis of the ions, and emission lines established by the optical analysis are compared with ion spectra established by the ion analysis, and hazardous gases contained in the sampled gas are determined as a result of the comparison, **characterized in that** the substances of the sampled gas are excited by energy being supplied by an energy supply device in which the substances of the sampled gas are excited by a hydrogen flame or a gas discharge, and the emission lines are detected by an optical spectroscope, and **in that** charge carriers are used to produce ions which are simultaneously supplied to the ion analysis carried out using ion mobility spectrometry.

3. The method according to Claim 2, **characterized in that** the extraction of the charge carriers from the energy supply device into the ionization chamber is performed with the assistance of electrodes and a countercurrent of a drift gas which prevents neutral particles or ions from the ion source from reaching the ionization chamber.

4. The method according to either one of Claims 2 or 3, **characterized in that** the extraction of the charge carriers from the energy supply device into the ionization chamber is performed with the assistance of electrodes which are operated in pulsed manner.

5. The method according to any one of claims 2 to 4, **characterized in that** the charge carriers are removed from the energy supply device via a temporal succession of positive and negative potentials at the electrodes in such a way that no neutral particles from the ion source reach the ionization chamber and product ions are produced in the ionization chamber by impact of the charge carriers with the target substances in the sampled gas, these product ions being investigated by way of ion analysis.

6. The method according to any one of Claims 2 to 5, **characterized in that** selected charge carriers are removed from the energy supply device by extraction electrodes and from an energy supply device operated in pulsed manner, such that only one type of charge carriers reaches the ionization chamber.

7. The method according to any one of Claims 2 to 6, **characterized in that** ion analysis is performed using a combination of ion mobility spectrometry and mass spectrometry.

8. The method according to any one of Claims 2 to 7 for detecting and identifying organophosphorus compounds, in which the "phosphorus emission line" at 525 nm is detected by the optical analysis and, in the event of the presence thereof, the established ion spectra are compared with the ion spectra in the database of the comparator (22) and, in the event of a match, a warning is given about the substance and the identification result is displayed by the display means (24).

9. The method according to any one of Claims 2 to 7 for detecting and identifying sulfur-containing compounds, in which the "sulfur emission line" at 394 mm is detected by the optical analysis and, in the event of the presence thereof, the established ion spectra are compared in the database of the comparator (22) and, in the event of a match, a warning is given about the substance and the identification result is displayed by the display means (24).

## Revendications

1. Dispositif (10) pour la détection de polluants gazeux, comprenant
- une unité d'analyse optique (12),
- un analyseur d'ions (14) constitué d'un spectromètre de mobilité ionique,
- une conduite d'alimentation (16) pour le gaz de mesure à analyser vers l'unité d'analyse optique (12) et l'analyseur d'ions (14),
- une unité d'évaluation (18) pour la mesure photométrique des raies d'émission fournies au moyen de l'unité d'analyse optique (12),
- une unité d'évaluation (20) pour déterminer un spectre ionique du gaz de mesure à analyser à l'aide de l'analyseur d'ions (14),
- un appareil de comparaison (22) pour comparer les raies d'émission avec les spectres ioniques et
un appareil d'affichage (24) pour afficher les substances du gaz de mesure à analyser déterminées par l'unité de comparaison, **caractérisé en ce que** l'unité d'analyse optique (12) comprend une source d'ions (23) qui comprend un appareil d'apport d'énergie (24) qui comprend une flamme d'hydrogène ou un dispositif à décharge gazeuse, et à la source d'ions (23) sont associés une chambre d'ionisation (32) et des électrodes d'extraction (42) par l'intermédiaire desquels des ions peuvent être acheminés vers l'analyseur d'ions (14).

2. Procédé pour la détection de polluants gazeux, dans lequel un gaz de mesure est acheminé vers un dispositif pour la détermination de composés chimiques contenus dans le gaz de mesure, le gaz de mesure est soumis à une analyse optique et à une analyse des ions, et des raies d'émission déterminées par l'analyse optique sont comparées à des spectres ioniques déterminés par l'analyse ionique et des polluants gazeux contenus dans le gaz de mesure sont déterminés en résultat de la comparaison, **caractérisé en ce que** les substances du gaz de mesure sont excitées par un apport d'énergie au moyen d'un dispositif d'apport d'énergie, dans lequel les substances du gaz de mesure sont excitées par une flamme d'hydrogène ou une décharge gazeuse, et les raies d'émission sont détectées par un spectroscope optique, et **en ce que** des porteurs de charge sont utilisés pour générer des ions qui sont simultanément acheminés vers l'analyse ionique avec une spectrométrie de mobilité ionique.

3. Procédé selon la revendication 2, **caractérisé en ce que** le retrait des porteurs de charge du dispositif d'apport d'énergie dans la chambre d'ionisation s'effectue à l'aide d'électrodes et d'un contre-courant provenant d'un gaz de dérive, qui empêche les particules neutres ou les ions provenant de la source d'ions d'atteindre la chambre d'ionisation.

4. Procédé selon l'une quelconque des revendications 2 ou 3, **caractérisé en ce que** le retrait des porteurs de charge du dispositif d'apport d'énergie dans la chambre d'ionisation s'effectue à l'aide d'électrodes qui sont exploitées de manière pulsée.

5. Procédé selon l'une quelconque des revendications 2 à 4, **caractérisé en ce que** les porteurs de charge sont extraits du dispositif d'apport d'énergie par l'intermédiaire de potentiels positifs et négatifs successifs dans le temps au niveau des électrodes, de telle sorte qu'aucune particule neutre n'atteint la chambre d'ionisation à partir de la source d'ions et, dans la chambre d'ionisation, la collision des porteurs de charge avec les substances cibles dans le gaz de mesure génère des ions produits qui sont analysés au moyen d'une analyse ionique.

6. Procédé selon l'une quelconque des revendications 2 à 5, **caractérisé en ce que** des porteurs de charge sélectionnés sont extraits du dispositif d'apport d'énergie par des électrodes d'extraction et d'un dispositif d'apport d'énergie exploité de manière pulsée, de telle sorte que seul un type de porteurs de charge atteint la chambre d'ionisation.

7. Procédé selon l'une quelconque des revendications 2 à 6, **caractérisé en ce que** l'analyse ionique s'effectue avec la combinaison de spectrométrie de mobilité ionique et de spectrométrie de masse.

8. Procédé selon l'une quelconque des revendications 2 à 7 pour la détection et l'identification de composés organophosphorés, dans lequel la « raie d'émission de phosphore » à 525 nm est détectée par l'analyse optique et, en cas de présence de celle-ci, les spectres ioniques déterminés sont comparés aux spectres ioniques dans la base de données de l'appareil de comparaison (22) et, en cas de concordance, un avertissement concernant la substance est émis et le résultat de l'identification est affiché par l'intermédiaire de l'appareil d'affichage (24).

9. Procédé selon l'une quelconque des revendications 2 à 7 pour la détection et l'identification de composés soufrés, dans lequel la « raie d'émission de soufre » à 394 nm est détectée par l'analyse optique et, en cas de présence de celle-ci, les spectres ioniques déterminés sont comparés dans la base de données de l'appareil de comparaison (22) et, en cas de concordance, un avertissement concernant la substance est émis et le résultat de l'identification est affiché par l'intermédiaire de l'appareil d'affichage (24).
